# FASCICULE DE BREVET EUROPEEN

(11) **EP 3 623 606 B1**
(45) Date de publication et mention de la délivrance du brevet: **29.09.2021**
(21) Numéro de dépôt: 19194593.0
(22) Date de dépôt: 30.08.2019
(51) Int. Cl.: F02C 7/14, F28D 9/00, F28D 7/00, F28D 1/04

(54) **MATRICE D'ÉCHANGEUR DE CHALEUR MULTI-FLUIDES**
MULTI-FLUID-MATRIX EINES WÄRMETAUSCHERS
MULTI-FLUID HEAT EXCHANGER MATRIX

(30) Priorité: 11.09.2018 BE 201805623
(43) Date de publication de la demande: 18.03.2020
(73) Titulaire: Safran Aero Boosters SA, 4041 Herstal (BE)
(72) Inventeur: RAIMARCKERS, Nicolas, 4263 Tourinne (Braives) (BE)
(74) Mandataire: Lecomte & Partners

(56) Documents cités:
- WO-A1-2018/065304
- US-A- 3 153 446
- US-A1- 2006 180 703
- US-A1- 2017 131 034

## Description

### Domaine technique

L'invention se rapporte au domaine des échangeurs de chaleur de turbomachine. Plus précisément, l'invention propose une matrice pour un échangeur de chaleur air/huile de turbomachine. L'invention a également trait à une turbomachine axiale, notamment un turboréacteur d'avion ou un turbopropulseur d'aéronef. L'invention propose en outre un procédé de réalisation d'une matrice d'échangeur de chaleur.

### Technique antérieure

Le document US 2015/0345396 A1 divulgue un turboréacteur double flux doté d'un échangeur de chaleur. Cet échangeur de chaleur équipe une paroi d'aube afin de la refroidir. L'échangeur de chaleur comporte un corps dans le lequel est formée une structure vasculaire permettant le passage d'un fluide de refroidissement au travers du corps. La structure vasculaire se présente sous la forme de noeuds reliés par des branches, ces nœuds et ces branches étant évidés de sorte à y ménager des passages interconnectés au travers du corps. Toutefois, l'efficacité de l'échange thermique reste limitée.

Un autre exemple d'échangeur de chaleur est divulgué par le document WO 2015/077490 A1 qui consiste en une superposition stratifiée de canaux rectilignes, obtenus par fabrication additive. Cet échangeur n'est pas adapté, ni par sa forme, ni par ses fonctionnalités, à un usage dans un turboréacteur.

Un exemple est également décrit dans US 2006/0180703 A1 où une matrice commune est utilisée pour refroidir deux fluides indépendants.

### Résumé de l'invention

### Problème technique

L'invention a pour objectif de résoudre au moins un des problèmes posés par l'art antérieur. L'invention a pour objectif d'optimiser l'échange thermique, les pertes de charges, et éventuellement le fonctionnement d'une turbomachine. L'invention a également pour objectif de proposer une solution simple et compacte, facile à produire et commode d'entretien.

### Solution technique

L'invention a pour objet une matrice d'échangeur de chaleur, notamment pour une turbomachine, la matrice étant remarquable en ce qu'elle comprend au moins trois passages pour au moins trois fluides respectifs, les passages étant tels qu'ils permettent à chacun des fluides d'échanger de la chaleur avec chacun des autres fluides.

Les au moins trois passages conduisent les fluides à circuler selon au moins trois directions moyennes d'écoulement respectives, les au moins trois directions étant sécantes deux à deux. Par « sécantes », on entend qu'aucune des directions moyennes d'écoulement n'est parallèle à une autre direction.

Les passages sont délimités par des parois au travers desquelles un échange de chaleur s'opère entre chacun des fluides, au moins un des passages étant délimité par des parois formées par un réseau de tubes.

Les parois des tubes sont, à l'intérieur, directement au contact d'un des fluides et sont, à l'extérieur, directement au contact des deux autres fluides. Ainsi, au moins une portion de paroi de tube « voit », d'un côté (intérieur) un fluide, et de l'autre (extérieur) un second fluide, pour échanger de la chaleur entre ces deux fluides, et la même paroi, sur une autre de ses portions, « voit », d'un côté intérieur le fluide et de l'autre côté le troisième fluide pour échanger de la chaleur entre ces deux fluides.

Selon un mode avantageux de l'invention, la matrice peut comprendre l'un des éléments suivants, seuls ou en combinaison :
- la matrice est fabriquée par un procédé de fabrication additive. Le fait que la matrice soit fabriquée par fabrication additive s'observe notamment par ses formes géométriques qui comprennent des passages de fluide imbriqués les uns dans les autres, formes qui ne sont pas réalisables par moulage ou par un autre procédé conventionnel. Aussi, l'état de surface de certaines parties de la matrice permet d'observer que son procédé de fabrication est un procédé additif ;
- lors de la fabrication de la matrice, la direction d'impression n'est parallèle à aucune des directions moyennes d'écoulement des fluides ;
- les tubes présentent des profils en ellipse, en goutte d'eau, ou en losange. Les tubes peuvent être parallèles les uns aux autres. Les tubes peuvent être linéaires ou en zig-zag. Ils peuvent s'étendre hélicoïdalement dans la matrice ;
- au moins un des passages est délimité par des éléments au moins partiellement plan, tels que des ailettes ou des plaques, potentiellement planes ou ondulées ;
- au moins un des passages se présente sous la forme d'un U ou d'un serpentin. Ainsi, un des passages peut être « borgne », c'est-à-dire qu'il ne traverse pas entièrement la matrice. L'entrée de fluide et sa sortie se font du même côté de la matrice.

L'invention porte également sur un échangeur de chaleur comprenant une telle matrice ainsi qu'un collecteur d'entrée et un collecteur de sortie respectifs pour chacun des au moins trois fluides. Alternativement un ou l'autre des fluides peut être issu du milieu dans lequel est plongée la matrice et être dépourvu de collecteur.

Lorsqu'un des fluides est de l'air environnant l'échangeur, le collecteur peut être formé par des déflecteurs en amont de l'échangeur.

Selon un mode avantageux de l'invention, l'échangeur peut comprendre un ou plusieurs des éléments suivants :
- l'échangeur comprend des capteurs de température en amont et en aval de la matrice pour mesurer la température d'au moins un des fluides avant et après qu'il a parcouru la matrice, et des moyens de régulation du flux d'au moins un des fluides. Les moyens de régulation peuvent être choisis parmi les éléments suivants : vanne, pompe, réducteur de débit, déflecteur, obturateur, écope, ventilateur, électronique de commande, etc ;
- l'échangeur comprend des moyens de contrôle configurés pour obtenir, par action sur les moyens de régulation, une température donnée pour un ou plusieurs des fluides en aval de la matrice. La température cible peut être prévue pour un ou plusieurs des fluides. Des températures visées peuvent être des plages de valeurs. Une priorité ou un ordonnancement peut être défini(e) pour atteindre une valeur de température pour l'un des fluides en priorité. Alternativement, un compromis peut être recherché pour que tous les fluides soient aussi proches que possible de leur valeur cible ou plage de valeurs cibles. À cette fin, les équations standard de transfert the chaleur ou une calibration du système peuvent être utilisées ;

- l'échangeur est un échangeur du type FCOC (fuel cooled oil cooler) ou ACOC (air cooled oil cooler). Ainsi, au moins un des fluides est de l'huile, et au moins un des fluides est du fuel ou de l'air ;
- l'échangeur de chaleur présente une forme générale arquée ; les tubes étant éventuellement orientés radialement.

L'invention porte également sur un turboréacteur d'aéronef comprenant des paliers et une transmission entrainant une soufflante, remarquable en ce qu'il comprend en outre au moins un échangeur tel que décrit ci-dessus, les fluides traversant l'échangeur étant des fluides du groupe suivant : air froid, air chaud, huile de lubrification, huile de refroidissement, huile VFSG (variable frequency starting generator), huile IDG (integrated drive generator), carburant.

L'air chaud peut être celui des gaz d'échappement, du bleed, ou d'un air chauffé au contact d'éléments chauds du turboréacteur.

Selon un mode avantageux de l'invention, le turboréacteur comprend une manche de prélèvement d'air, ledit air formant un des au moins trois fluides.

L'invention porte également sur un système pour un aéronef, comprenant : un turboréacteur tel que décrit ci-dessus et une pile à combustible munie d'un circuit hydraulique de mise et maintien en température de fonctionnement, ledit circuit coopérant avec l'échangeur de chaleur du turboréacteur.

L'invention porte enfin également sur un procédé de réalisation d'une matrice d'échangeur de chaleur pour échanger de la chaleur entre au moins trois fluides, notamment une matrice selon l'un des modes de réalisation exposés ci-dessus, le procédé comprenant les étapes suivantes : (a) conception de l'échangeur de chaleur et de sa matrice ; (b) réalisation de la matrice et en particulier des passages pour les fluides, par fabrication additive suivant une direction d'impression, la direction d'impression étant inclinée par rapport à toutes les directions moyennes d'écoulement des fluides.

Selon des modes particuliers de réalisation, la matrice, l'échangeur, le turboréacteur, le système ou le procédé peuvent comprendre une ou plusieurs des caractéristiques suivantes, prises isolément ou selon toutes les combinaisons techniques possibles :
- La matrice comprend un réseau dans lequel circule un des fluides, le réseau supportant au moins deux ailettes successives selon l'écoulement du premier fluide, lesdites ailettes successives s'étendant suivant des directions principales inclinées l'une par rapport à l'autre d'au moins 10°, ou d'au moins 45°, formant des croix ou des entrecroisements.
- Les directions moyennes d'écoulement principales des fluides sont inclinées l'une par rapport à l'autre d'au moins 5°, ou d'au moins 20°, ou de 90°.
- Un procédé d'utilisation comprend une étape de chauffe de l'huile de maintien en température de la pile à combustible, pour qu'elle ne se fige pas, peut être opérée au besoin, notamment lors d'un démarrage à froid ou lorsque la température n'est pas dans une plage optimale comprise entre 20°C et 150°C. L'utilisation peut aussi porter sur le chauffage du fuel (servo fuel heater).
- Le circuit de lubrification du turboréacteur comprend une portion qui forme un échangeur avec l'air du « bleed » du turboréacteur pour réchauffer l'huile. Cet air chaud qui peut être évacué en sortie de compresseur et avant la chambre de combustion permet en effet de réchauffer l'huile.
- Le circuit de lubrification du turboréacteur comprend une portion qui forme un échangeur avec l'air ambiant ou l'air by-pass du turboréacteur pour refroidir l'huile.
- La matrice comprend des logements pour des éléments chauffants tel que des crayons chauffants des résistances électriques, et/ou des films chauffants.

### Avantages apportés

La solution proposée est une solution compacte, légère et efficiente en termes d'échanges thermiques. En combinant au moins trois flux de fluides en un seul échangeur, les possibilités d'ajustement en chauffe ou refroidissement de chaque fluide sont multipliées. La justesse de la régulation des températures est également accrue. Enfin, l'invention permet une réversibilité, c'est-à-dire une chauffe ou un refroidissement, pour un même fluide donné, en fonction des besoins.

### Brève description des dessins

La figure 1 représente un système selon l'invention ;
La figure 2 esquisse une vue de face d'un échangeur de chaleur selon l'invention.
La figure 3 illustre une vue de face d'une matrice de l'échangeur de chaleur selon un premier mode de réalisation de l'invention.
La figure 4 est une vue isométrique d'un échangeur de chaleur selon l'invention.
La figure 5 est une coupe de la matrice suivant l'axe 5-5 tracé sur la figure 3.
La figure 6 illustre une vue de face d'une matrice d'échangeur de chaleur selon un deuxième mode de réalisation de l'invention.
La figure 7 représente un agrandissement d'un canal type de la figure 6.
La figure 8 est une coupe de la matrice du deuxième mode de réalisation suivant l'axe 8-8 tracé sur la figure 6.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

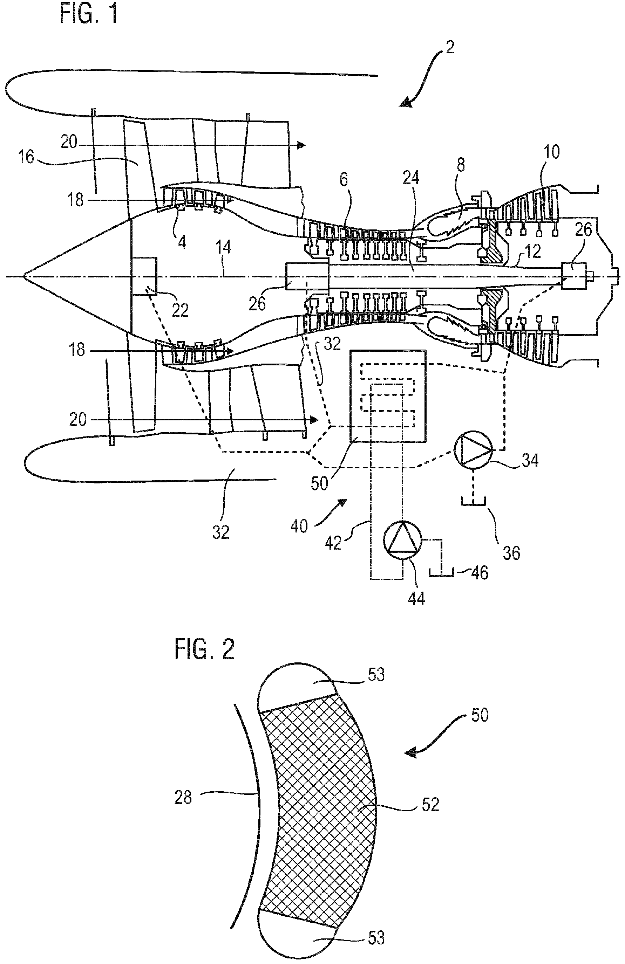

La figure 1 représente de manière simplifiée une turbomachine axiale 2. Le turboréacteur 2 comprend un premier compresseur, basse-pression 4 et un deuxième compresseur, haute-pression 6, une chambre de combustion 8 et une ou plusieurs turbines 10. En fonctionnement, la puissance mécanique de la turbine 10 transmise au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Une soufflante 16 est couplée au rotor 12 et génère un flux d'air qui se divise en un flux primaire 18 et en un flux secondaire 20 traversant un conduit annulaire (partiellement représenté) le long de la machine pour ensuite rejoindre le flux primaire en sortie de turbine.

Des moyens de démultiplication, tel un réducteur épicycloïdal 22, peuvent réduire la vitesse de rotation de la soufflante et/ou du compresseur basse-pression par rapport à la turbine associée. Le flux secondaire peut être accéléré de sorte à générer une réaction de poussée nécessaire au vol d'un avion.

Le rotor 12 comprend un arbre de transmission 24 monté sur le carter au moyen de deux paliers 26.

Afin de lubrifier les éléments tournants du turboréacteur 2, un circuit de lubrification 30 est prévu. Ce circuit 30 comprend des conduits 32 pour transporter l'huile aux organes du turboréacteur la nécessitant, comme notamment la boite d'engrenage 22 et les paliers 26. Le circuit 30 comprend à cette fin une pompe 34 pour mettre en mouvement l'huile dans le circuit 30 et un réservoir 36.

La figure 1 montre également un circuit 40, muni de conduits 42, d'une pompe 44 et d'un réservoir 46 afin de mettre en mouvement un fluide. Ce fluide peut être du carburant, de l'huile, de l'air, etc.

Un échangeur à chaleur 50 est prévu pour réguler la température de l'huile dans le circuit 30 et/ou la température du fluide dans le circuit 40. L'échangeur 50 peut être positionné dans le flux secondaire 20 pour refroidir l'huile grâce l'air froid du flux secondaire. Alternativement, ou en complément, l'échangeur 50 peut aussi être prévu en aval des vannes de bleed, pour réchauffer les fluides grâce à l'air chaud. Les fluides des circuits 30 et 40 pénètrent dans le même échangeur 50 pour être refroidis ou réchauffés. L'échangeur 50 voit donc circuler trois fluides, qui dans ce cas sont l'air du flux secondaire 20, l'huile de refroidissement et de lubrification des paliers 26 et du train 22, et un troisième fluide qui peut être du carburant, de l'huile, etc.

En adaptant le débit ou le temps de passage de l'un et/ou l'autre des fluides, la température de l'un au moins des fluides peut être régulée de manière précise.

Il est entendu que les circuits comprennent tous les organes permettant de contrôler la température, la pression et le débit pour obtenir un fonctionnement optimal (capteurs, vannes, surpresseur, réducteur de débit, etc.).

Les réservoirs 36, 46 peuvent être fixés à la nacelle de la turbomachine 2, ou à un carter de compresseur. Les réservoirs 36, 46 peuvent être placés entre deux parois annulaires guidant des flux concentriques ; par exemple le flux secondaire 20 et le flux entourant la turbomachine 2, ou entre le flux primaire 18 et le flux secondaire 20.

La figure 2 montre une vue en plan d'un échangeur de chaleur 50 tel que celui représenté en figure 1. L'échangeur de chaleur 50 présente une forme générale arquée. Il épouse un carter annulaire 28 de la turbomachine. Il est traversé par l'air du flux secondaire qui forme un premier fluide, et accueille de l'huile formant un deuxième fluide ainsi qu'un troisième fluide. Il comporte une matrice 52 disposée entre deux collecteurs 53 fermant ses extrémités et collectant le deuxième fluide et éventuellement le troisième fluide.

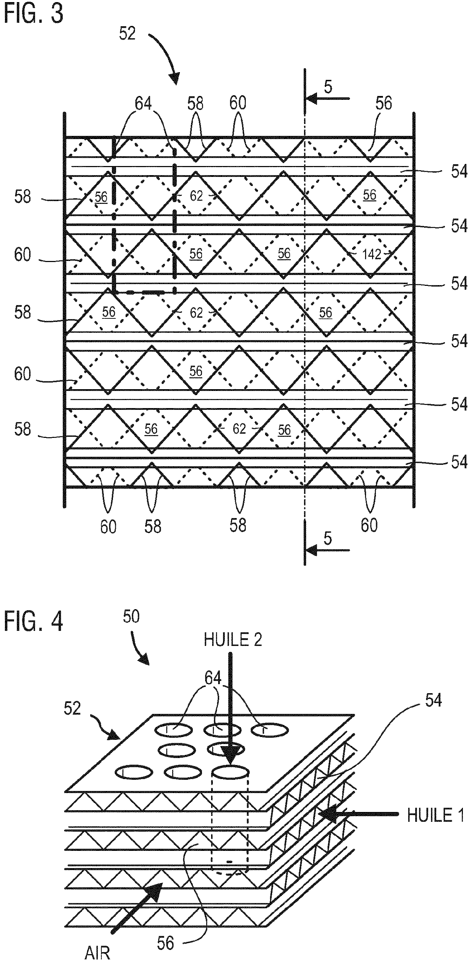

La figure 3 esquisse une vue de face d'une matrice 52 d'échangeur de chaleur selon le premier mode de réalisation de l'invention. La matrice 52 peut correspondre à celle représentée en figure 2.

La matrice 52 présente une traversée permettant à l'air de s'écouler de part en part de la matrice 52. L'écoulement de l'air peut s'effectuer selon un sens général, perpendiculairement à la figure. La traversée peut généralement former un couloir ; éventuellement de contour externe variable. Afin de permettre l'échange de chaleur, un réseau recevant l'huile est disposé dans la traversée. Le réseau peut comprendre une série de tubes 54. Les différents tubes 54 peuvent ménager des passages 56 entre eux. De manière à accroitre l'échange thermique, les tubes 54 supportent des ailettes 58, 60. Ces ailettes 58, 60 peuvent être placées à la suite l'une de l'autre selon l'écoulement de l'air, si bien qu'elles forment des ailettes successives selon cet écoulement. La concentration en ailettes dans la matrice 52 peut varier. Dans la présente matrice 52, on représente une première succession avec des ailettes avant 58 (représentées en traits pleins), et des ailettes arrière 60 (représentées en traits pointillés). Les ailettes avant 58 sont placées dans un plan avant, et les ailettes arrière 60 sont placées en arrière-plan.

Les ailettes 58, 60 sont décalées d'un plan à l'autre. Par décalage on entend une variation d'inclinaison, et/ou un écart transversalement à l'écoulement de l'air. Par exemple, deux ailettes successives 58, 60 peuvent chacune s'étendre dans l'air selon une direction principale propre. Ces directions principales peuvent être inclinées l'une par rapport à l'autre, notamment inclinées de 90°. De face, les ailettes successives 58, 60 dessinent des croix, par exemple des séries de croix reliant les tubes 54. Puisque les ailettes 58, 60 sont inclinées par rapport aux tubes 54, elles forment des triangulations, ou des jambes de force.

Les intersections 62 dans l'espace des ailettes successives 58, 60 sont à distance des tubes 54, éventuellement à mi-distance entre deux tubes 54 successifs. Cette position centrale des intersections 62 évite d'amplifier les pertes dans les couches limites.

La figure 3 montre également en trait mixte un passage 64. Pour ne pas surcharger la figure, seul un passage 64 est représenté. Il se présente dans cet exemple sous une forme tubulaire. Le passage 64 peut s'étendre sur toute la hauteur de la matrice ou sur une partie de sa hauteur seulement. Il peut être hélicoïdal, en serpentin, en U ou linéaire, ou toute combinaison de ces formes.

Le passage 64 est prévu pour laisser passer un fluide qui interagit par conduction thermique à la fois avec les tubes 54 et avec les passages 56.

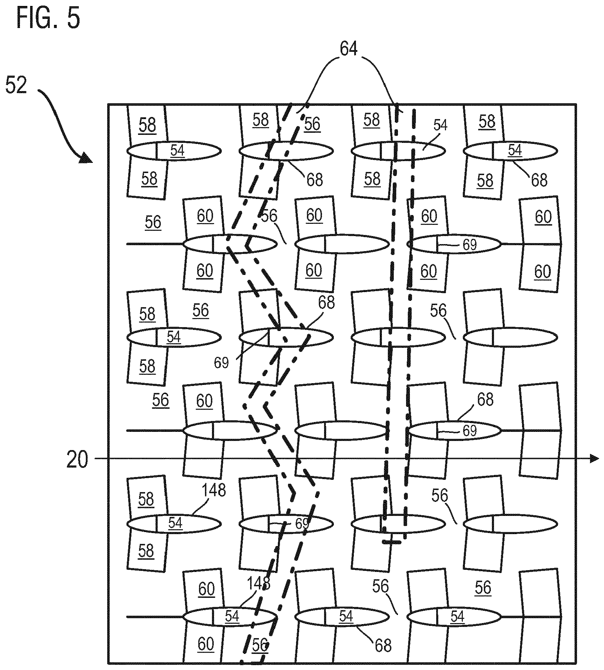

La matrice étant réalisée par fabrication additive, il y a très peu de restrictions sur la forme tubulaire du passage 64 comme illustré en figure 5.

La figure 4 est une vue isométrique schématique d'une portion de la matrice 52. On y observe les flux croisés des trois fluides, illustrés ici comme de l'air, de l'huile 1 et de l'huile 2, pénétrant respectivement dans les passages 54, 56 et 64 (schématiquement représentés). L'invention n'est pas limitée à ce design et l'homme du métier adapterait la position, la forme et l'orientation des passages en fonction des besoins en chauffage de l'huile ou de la conception globale des éléments environnant l'échangeur. Les passages 64 peuvent être disposés en réseau, par exemple en quinconce.

Les flèches sur la figure 4 représentent les directions moyennes (aussi appelées directions principales) de chacun des fluides. Ces directions sont ici perpendiculaires deux à deux. Elles peuvent alternativement former des angles (obtus ou aigus) entre elles.

La figure 5 est une coupe suivant l'axe 5-5 tracé sur la figure 3. Etant vues en coupe depuis des intersections, les ailettes 58, 60 sont visibles par moitiés.

Plusieurs successions d'ailettes 58, 60 sont représentées les unes derrière les autres le long du flux secondaire 20. Les ailettes 58, 60 s'étendent depuis les cloisons 68 formant les tubes 54. Elles peuvent former des languettes plates. Comme il est apparent ici, les tubes 54 sont agencés en quinconce dans la coupe et alignés suivant le flux d'air secondaire 20. Les cloisons 68 des tubes 54 forment la structure de la matrice 52, l'échange thermique s'opérant au travers de leurs épaisseurs. En outre, les tubes 54 peuvent être cloisonnés par une paroi interne 69, ce qui augmente leur rigidité. En option, l'intérieur des tubes est agrémenté d'obstacles (non représentées) pour générer des remous dans l'huile afin d'augmenter l'échange thermique.

Les ailettes 58, 60 des différents plans d'ailettes peuvent être à distance des autres ailettes, ce qui réduit la masse et l'occupation de la traversée. Les ailettes avant 58 peuvent joindre les tubes amont, et les ailettes arrière 60 rejoignent les tubes disposés en aval. Cette configuration permet de relier les tubes 54 les uns aux autres, tout en permettant le passage de l'air dans les passages 56 les séparant.

Les tubes 54 peuvent présenter des profils arrondis, par exemple en ellipses. Ils sont amincis transversalement à l'écoulement de l'air pour réduire les pertes de charges, et donc augmenter le débit possible. Les tubes 54 placés dans le prolongement les uns des autres selon l'écoulement de l'air sont séparés par les passages 56. De même, d'autres passages 56 séparent les tubes superposés. Puisque ces passages 56 communiquent les uns avec les autres, la matrice devient traversante et l'écoulement de l'air peut circuler en ligne droite tout comme en diagonale par rapport au flux secondaire 20.

Deux exemples de mode de réalisation des passages 64 sont illustrés. Ils peuvent relier les tubes 54 en zig-zag ou en ligne droite, ils peuvent former une hélice ou un serpentin. La fabrication additive permet d'obtenir toutes sortes de géométries et lorsque les passages 64 sont en zig-zag, l'échange de chaleur avec les tubes 54 et avec les passages 56 est maximisé car les surfaces des parois en regard est maximum.

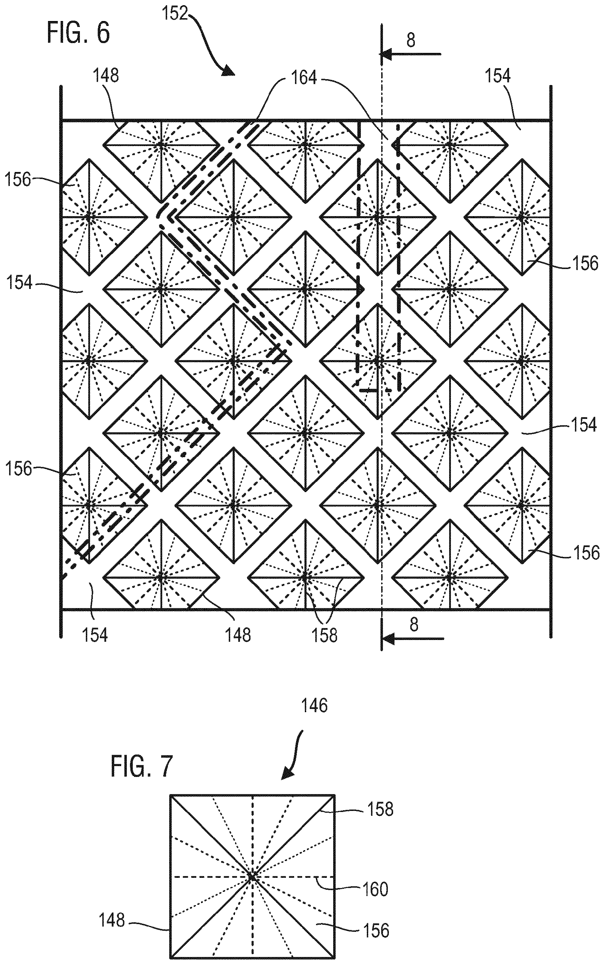

La figure 6 représente une matrice 152 d'échangeur de chaleur selon un deuxième mode de réalisation de l'invention. Cette figure 6 reprend la numérotation des figures précédentes pour les éléments identiques ou similaires, la numération étant toutefois incrémentée de 100. Des numéros spécifiques sont utilisés pour les éléments spécifiques à ce mode de réalisation.

La matrice 152 est représentée de face telle que la rencontre l'écoulement de l'air lorsqu'il pénètre la traversée. Le réseau forme un maillage 154, par exemple avec des voies reliées les unes aux autres en formant des polygones. Le maillage 154 peut éventuellement former des carrés. Les mailles du maillage 154 peuvent entourer des canaux 156 dans lesquels circule l'air. Ces canaux 156 peuvent être séparés les uns des autres par le maillage 154. Le réseau comporte une cloison 148 qui marque la séparation entre l'air et l'huile. L'échange thermique s'effectue au travers de cette cloison 148. Elle forme également la structure de la matrice 152. A l'intérieur, les canaux 156 sont barrés par des d'ailettes successives 158, 160, préférentiellement par plusieurs séries d'ailettes successives.

Deux exemples de mode de réalisation de passage 164 pour le troisième fluide sont représentés. Un exemple montre un passage 164 en zig-zag. L'autre exemple montre un passage linéaire le long d'un axe noté 8-8.

La figure 7 montre un agrandissement d'un canal 146 représentatif de ceux qui sont représentés en figure 6.

Les ailettes 158, 160 sont implantées sur la cloison 148. Elles peuvent en relier les faces opposées. Les ailettes 158, 160 peuvent former des croix, par exemple par réunion de deux ailettes coplanaires et sécantes. En outre, l'ensemble des ailettes 158, 160 peut former une enfilade de croix successives. Les différentes croix sont pivotées les unes par rapport aux autres afin d'optimiser l'échange de chaleur tout en limitant les pertes de charges. Par exemple, chaque croix est pivotée de 22,5° par rapport à sa croix en amont. Un motif à quatre croix pivotées régulièrement peut être répété. Eventuellement, les croix forment des passages 156 hélicoïdaux à l'intérieur des canaux 146, par exemple quatre passages 156 hélicoïdaux enroulés les uns autour des autres. Les canaux 146 peuvent être droits ou torsadés.

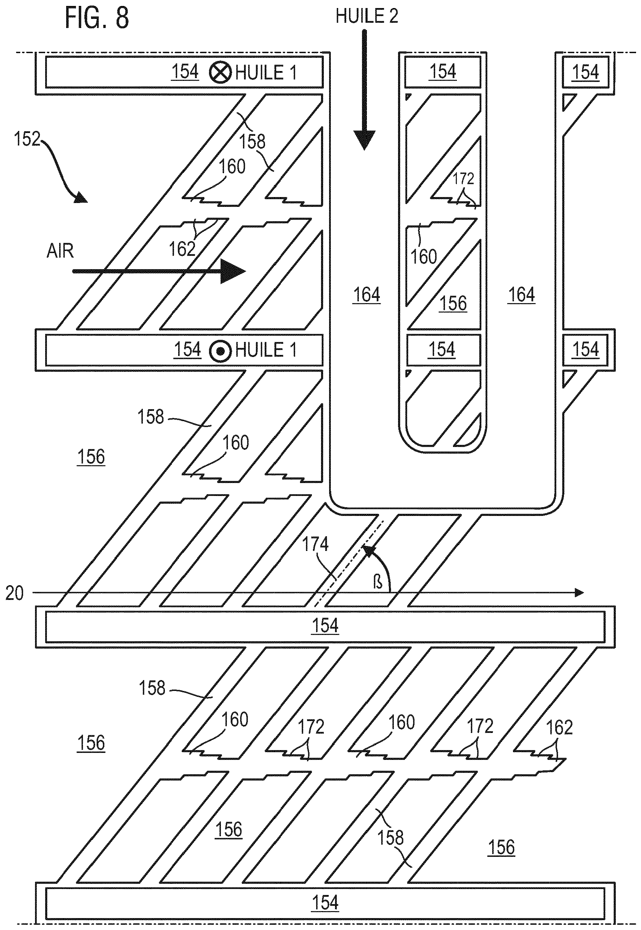

La figure 8 est une section partielle suivant l'axe 8-8 tracé sur la figure 6. Trois canaux (notés 146 sur la figure 7) sont représentés, tout comme quatre portions de passage 154 dans lesquels circule l'huile.

Les ailettes 158, 160 et donc les croix qu'elles forment apparaissent en coupe. Les ailettes avant 158 sont visibles sur toute leurs longueurs tandis que les ailettes arrière 160 ne sont que partiellement visibles puisqu'elles restent en coupe. Les croix suivantes sont également partiellement représentées via leurs moyeux 172 de croisement de leurs ailettes.

Les croix sont formées dans des plans. Ces plans sont parallèles les uns aux autres, et inclinés par rapport aux flux d'air secondaire 20. L'angle d'inclinaison β entre les plans 174 d'ailettes et l'écoulement général de l'air peut être compris entre 30° et 60°. L'angle d'inclinaison β peut éventuellement être égal à 45°. De cela découle que les passages 156 comprennent des tronçons inclinés par rapport au sens général de l'écoulement de l'air au travers de la matrice 152. Cet agencement incite l'air à changer de tronçon à mesure qu'il circule, et à mieux refroidir les ailettes décalées.

La figure 8 montre également un exemple de passage rectiligne 164 en forme de U, l'entrée de fluide et la sortie de fluide se faisant, pour le fluide parcourant le passage 164, du même côté de la matrice 152. On voit bien ici l'interaction entre les trois fluides au travers des parois délimitant les passages 154, 156, 164. On observe également la complexité de la structure qui ne pourrait pas être obtenue par des moyens conventionnels de fabrication.

La fabrication additive peut être réalisée à partir de poudre, éventuellement en titane ou en aluminium. L'épaisseur des couches peut être comprise entre 20 µm et 50 µm, ce qui permet d'atteindre une épaisseur d'ailette de l'ordre de 0,35 mm, et des cloisons de 0,60 mm.

Dans le procédé selon l'invention (non représenté), deux étapes sont réalisées :
(a) conception de la matrice de l'échangeur, la matrice comprenant un corps monobloc avec des ailettes successives ;
(b) réalisation de la matrice par fabrication additive selon une direction d'impression qui est inclinée par rapport aux directions principales des ailettes ou de chaque ailette. Cette inclinaison peut être comprise entre 30° et 50°.

Selon le cas, la direction d'impression peut être inclinée par rapport aux tubes 54 d'un angle compris entre 30° et 50°. Le cas échéant, la direction d'impression peut être sensiblement parallèle aux canaux 154, ou inclinée de moins 10°, ou de moins de 4°.

L'homme du métier comprendra que l'invention ne se limite pas à trois fluides. Avec la fabrication additive, il est possible de prévoir des passages de formes complexes qui s'entrecoupent au travers de la matrice.

Aussi, l'utilisation de la matrice selon l'invention ne se limite pas aux exemples de fluides illustrés.

## Revendications

1. Matrice (52, 152) d'échangeur de chaleur (50), notamment pour une turbomachine (2), la matrice (52, 152) comprenant au moins trois passages (54, 56, 64, 154, 156, 164) pour au moins trois fluides respectifs, les passages (54, 56, 64, 154, 156, 164) étant tels qu'ils permettent à chacun des fluides d'échanger de la chaleur avec chacun des autres fluides, les passages (54, 56, 64, 154, 156, 164) conduisant les fluides à circuler selon au moins trois directions moyennes d'écoulement respectives qui sont sécantes deux à deux, les passages (54, 56, 64, 154, 156, 164) étant délimités par des parois au travers desquelles un échange de chaleur s'opère entre chacun des fluides, **caractérisée en ce qu'** au moins un des passages (54) est formé par un réseau de tubes (64, 164), les parois des tubes (64, 164) étant à l'intérieur directement au contact d'un des fluides et à l'extérieur directement au contact d'au moins deux des autres fluides.

2. Matrice (52, 152) selon la revendication 1, **caractérisée en ce qu'**elle est fabriquée par un procédé de fabrication additive.

3. Matrice (52, 152) selon la revendication 2, **caractérisée en ce que** lors de la fabrication, la direction d'impression n'est parallèle à aucune des directions moyennes d'écoulement des fluides.

4. Matrice (52, 152) selon l'une des revendications 1 à 3, **caractérisée en ce que** les tubes (54) présentent des profils en ellipse, en goutte d'eau, ou en losange.

5. Matrice (52, 152) selon l'une des revendications 1 à 4, **caractérisée en ce qu'**au moins un des passages (56, 156) est délimité par des éléments au moins partiellement plan, tels que des ailettes (58, 60, 158, 160, 172) ou des plaques, potentiellement planes ou ondulées.

6. Matrice (52, 152) selon l'une des revendications 1 à 5, **caractérisée en ce qu'**au moins un des passages (64, 164) se présente sous la forme d'un U, d'un serpentin ou d'une hélice.

7. Échangeur (50) de chaleur comprenant une matrice (52, 152) selon l'une des revendications 1 à 6, ainsi qu'un collecteur d'entrée (53) et un collecteur de sortie (53) respectifs pour chacun des au moins trois fluides.

8. Échangeur (50) selon la revendication 7, **caractérisé en ce qu'**il comprend des capteurs de température en amont et en aval de la matrice (52, 152) pour mesurer la température d'au moins un des fluides avant et après qu'il a parcouru la matrice (52, 152), et des moyens de régulation du flux d'au moins un des fluides.

9. Échangeur (50) selon la revendication 8, **caractérisé en ce qu'**il comprend des moyens de contrôle configurés pour obtenir, par action sur les moyens de régulation, une température donnée pour un ou plusieurs des fluides en aval de la matrice.

10. Échangeur (50) selon l'une des revendications 7 à 9, **caractérisé en ce que** pour au moins un des fluides, le collecteur d'entrée et le collecteur de sortie sont d'un même côté de la matrice.

11. Échangeur (50) selon l'une des revendications 7 à 10, **caractérisé en ce qu'**il est un échangeur du type FCOC (fuel cooled oil cooler) ou ACOC (air cooled oil cooler).

12. Turboréacteur (2) d'aéronef comprenant des paliers (26) et une transmission (22) entrainant une soufflante (16), **caractérisé en ce qu'**il comprend en outre au moins un échangeur (50) selon l'une des revendications 7 à 11, les fluides traversant l'échangeur étant des fluides du groupe suivant : air froid, air chaud, huile de lubrification, huile de refroidissement, huile VFSG (variable frequency starting generator), huile IDG (integrated drive generator), carburant.

13. Turboréacteur (2) selon la revendication 12, **caractérisée en ce qu'**il comprend une manche de prélèvement d'air, ledit air formant un des au moins trois fluides.

14. Système pour un aéronef, comprenant :
- un turboréacteur (2) selon l'une des revendications 12 ou 13 ; et
- une pile à combustible munie d'un circuit hydraulique de mise et maintien en température de fonctionnement, ledit circuit coopérant avec l'échangeur (50) de chaleur du turboréacteur (2).

15. Procédé de réalisation d'une matrice (52, 152) selon l'une des revendications 1 à 6, pour échanger de la chaleur entre au moins trois fluides, le procédé comprenant les étapes suivantes :
(a) conception de l'échangeur de chaleur (50) et de sa matrice (52, 152) ;
(b) réalisation de la matrice et en particulier des passages (54, 56, 64, 154, 156, 164) pour les fluides, par fabrication additive suivant une direction d'impression, la direction d'impression étant inclinée par rapport à toutes les directions moyennes d'écoulement des fluides.

## Patentansprüche

1. Matrix (52, 152) für Wärmetauscher (50), insbesondere für eine Strahlturbine (2), wobei die Matrix (52, 152) umfasst
drei jeweilige Fluide, wobei die Durchgänge (54, 56, 64, 154, 156, 164) so beschaffen sind, dass jedes der Fluide Wärme mit jedem der anderen Fluide austauschen kann, wobei die Durchgänge (54, 56, 64, 154, 156, 164) dazu führen, dass die Fluide in mindestens drei jeweiligen mittleren Strömungsrichtungen fließen, die sich zwei mal zwei schneiden, wobei die Durchgänge (54, 56, 64, 154, 156, 164) sind durch Wände begrenzt sind, durch die ein Wärmeaustausch zwischen jeder der Fluide stattfindet,
**dadurch gekennzeichnet, dass** mindestens einer der Durchgänge durch ein Netzwerk von Rohren (64, 164) gebildet wird, wobei die Wände der Rohre (64, 164) innen direkt in Kontakt mit einem der Fluide stehen und außen direkt in Kontakt mit mindestens zwei der anderen Fluide stehen.

2. Matrix (52, 152) nach Anspruch 1, **dadurch gekennzeichnet, dass** sie durch ein additives Herstellungsverfahren hergestellt wird.

3. Matrix (52, 152) nach Anspruch 2, **dadurch gekennzeichnet, dass** die Druckrichtung nicht parallel zu einer der mittleren Fluidströmungsrichtungen ist.

4. Matrix (52, 152) nach einem der Ansprüche 1 bis 3, **dadurch gekennzeichnet, dass** die Rohre (54) elliptische, tropfenförmige oder Rhombusprofile aufweisen.

5. Matrix (52, 152) nach einem der Ansprüche 1 bis 4, **dadurch gekennzeichnet, dass dadurch gekennzeichnet, dass** mindestens einer der Durchgänge (56, 156) durch mindestens teilweise flache Elemente wie Rippen (58, 60, 158, 160, 172) oder Platten begrenzt ist, die möglicherweise flach oder gewellt sind.

6. Matrix (52, 152) nach einem der Ansprüche 1 bis 5, **dadurch gekennzeichnet, dass dadurch gekennzeichnet, dass** mindestens eine der Passagen (64, 164) die Form eines U, einer Spule oder einer Spirale hat.

7. Wärmetauscher (50), umfassend eine Matrix (52, 152) nach einem der Ansprüche 1 bis 6, als auch einen jeweiligen Einlasskrümmer (53) und Auslasskrümmer (53) für jede der mindestens drei Fluide.

8. Wärmetauscher (50) nach Anspruch 7, **dadurch gekennzeichnet, dass** er Temperatursensoren stromaufwärts und stromabwärts der Matrix (52, 152) zum Messen der Temperatur von mindestens einem der Fluide vor und nach dem Durchlaufen der Matrix (52, 152) und Mittel zum Regulieren des Durchflusses von mindestens einem der Fluide umfasst.

9. Wärmetauscher (50) nach Anspruch 8, **dadurch gekennzeichnet, dass** er Steuermittel umfasst, die konfiguriert sind, um durch Einwirken auf das Regulierungsmittel eine gegebene Temperatur für eine oder mehrere der Fluide stromabwärts der Matrix zu erhalten.

10. Wärmetauscher nach einem der Ansprüche 7 bis 9, **dadurch gekennzeichnet, dass** sich für mindestens eines der Fluide der Einlasskrümmer und der Auslasskrümmer auf derselben Seite der Matrix befinden.

11. Wärmetauscher nach einem der Ansprüche 7 bis 10, **dadurch gekennzeichnet, dass** es sich um einen Wärmetauscher vom Typ FCOC (kraftstoffgekühlter Ölkühler) oder ACOC (luftgekühlter Ölkühler) handelt.

12. Flugzeugstrahlturbine (2), umfassend Lager (26) und ein Getriebe (22), das einen Lüfter (16) antreibt, **dadurch gekennzeichnet, dass** er ferner mindestens einen Wärmetauscher (50) gemäß einem der Ansprüche 7 bis 11 umfasst, wobei die Fluide, die den Austauscher durchströmen, Fluide der folgenden Gruppe sind: kalte Luft, heiße Luft, Schmieröl, Kühlöl, VFSG-ÖI (Startgenerator mit variabler Frequenz), IDG-ÖI (Generator mit integriertem Antrieb), Kraftstoff.

13. Strahlturbine (2) nach Anspruch 12, **dadurch gekennzeichnet, dass** sie eine Luftprobenahmehülse umfasst, wobei die Luft eine von mindestens drei Fluiden bildet.

14. System für ein Flugzeug, umfassend:
― eine Strahlturbine (2) nach einem der Ansprüche 12 oder 13; und
― eine Brennstoffzelle, die mit einem Hydraulikkreislauf zum Einstellen und Aufrechterhalten der Betriebstemperatur ausgestattet ist, wobei der Kreislauf mit dem Wärmetauscher (50) der Strahlturbine (2) zusammenarbeitet.

15. Umsetzungsverfahren einer Matrix (52, 152) nach einem der Ansprüche 1 bis 6 zum Austausch der Wärme zwischen mindestens drei Fluiden, wobei das Verfahren die folgenden Schritte umfasst:
(a) Aufbau des Wärmetauschers (50) und seiner Matrix (52, 152);
(b) Herstellung der Matrize und insbesondere der Durchgänge (54, 56, 64, 154, 156, 164) für die Flüssigkeiten durch additive Herstellung in einer Druckrichtung, wobei die Druckrichtung in Bezug auf alle mittleren Richtungen geneigt ist des Fluidflusses.

## Claims

1. Heat exchanger (50) matrix (52, 152), in particular for a turbomachine (2), the matrix (52, 152) comprising at least three passages (54, 56, 64, 154, 156, 164) for at least three respective fluids, the passages (54, 56, 64, 154, 156, 164) being such as to allow each oof the fluids to exchange heat with each of the other fluids, the passages (54, 56, 64, 154, 156, 164) leading the fluids to circulate in at least three respective mean flow directions which intersect two by two, the passages (54, 56, 64, 154, 156, 164) being delimited by walls through which a heat exchange takes place between each of the fluids, **characterised in that** at least one of the passages (54) is formed by a network of tubes (64, 164), the walls of the tubes (64, 164) being on the inside directly in contact with one of the fluids and on the outside directly in contact with at least two of the other fluids.

2. Matrix (52, 152) according to claim 1, **characterised in that** it is manufactured by an additive manufacturing process.

3. Matrix (52, 152) according to claim 2, **characterised in that** during manufacturing, the forming direction is not parallel to any of the mean fluid flow directions.

4. Matrix (52, 152) according to any one of claims 1 to 3, **characterised in that** the tubes (54) have elliptical, teardrop or diamond profiles.

5. Matrix (52, 152) according to any one of claims 1 to 4, **characterised in that** at least one of the passages (56, 156) is delimited by at least partially planar elements, such as fins (58, 60, 158, 160, 172) or plates, potentially flat or corrugated.

6. Matrix (52, 152) according to any one of claims 1 to 5, **characterised in that** at least one of the passages (64, 164) is in the form of a U, a coil or a helix.

7. Heat exchanger (50) comprising a matrix (52, 152) according to any one of claims 1 to 6, as well as an inlet manifold (53) and an outlet manifold (53) respectively for each of the at least three fluids.

8. Exchanger (50) according to claim 7, **characterised in that** it comprises temperature sensors upstream and downstream of the matrix (52, 152) for measuring the temperature of at least one of the fluids before and after it has it has passed through the matrix (52, 152), and means for regulating the flow of at least one of the fluids.

9. Exchanger (50) according to claim 8, **characterised in that** it comprises control means configured to obtain, by acting on the regulating means, a given temperature for one or a plurality of the fluids downstream of the matrix.

10. Exchanger (50) according to any one of claims 7 to 9, **characterised in that** for at least one of the fluids, the inlet manifold and the outlet manifold are on the same side of the matrix.

11. Exchanger (50) according to any one of claims 7 to 10, **characterised in that** it is an exchanger of the FCOC (fuel-cooled oil cooler) or ACOC (air-cooled oil cooler) type.

12. Aircraft turbojet (2) comprising bearings (26) and a transmission (22) driving a fan (16), **characterised in that** it further comprises at least one exchanger (50) according to any one of claims 7 to 11, the fluids passing through the exchanger being fluids of the following group: cold air, hot air, lubricating oil, cooling oil, VFSG (variable frequency starting generator) oil, IDG (integrated drive generator) oil, fuel.

13. Turbojet (2) according to claim 12, **characterised in that** it comprises an air sampling sleeve, said air forming one of at least three fluids.

14. System for an aircraft, comprising:
- a turbojet (2) according to any one of claims 12 and 13; and
- a fuel cell provided with a hydraulic circuit for setting and maintaining operating temperature, said circuit cooperating with the heat exchanger (50) of the turbojet (2).

15. Method for producing a matrix (52, 152) according to any one of claims 1 to 6, for exchanging heat between at least three fluids, the method comprising the following steps:
(a) design of the heat exchanger (50) and its matrix (52, 152);
(b) production of the matrix and in particular of the passages (54, 56, 64, 154, 156, 164) for fluids, by additive manufacturing in a forming direction, the forming direction being inclined with respect to all the mean fluid flow directions.
